# EUROPÄISCHE PATENTSCHRIFT

(11) **EP 3 138 192 B1**
(45) Veröffentlichungstag und Bekanntmachung des Hinweises auf die Patenterteilung: **19.02.2025**
(21) Anmeldenummer: 15717806.2
(22) Anmeldetag: 13.04.2015
(51) Int. Cl.: H02M 7/162

(54) **VORRICHTUNG ZUM BETREIBEN EINES GLEICHRICHTERS, INSBESONDERE EINER HALBGESTEUERTEN GLEICHRICHTERBRÜCKE, UND VERFAHREN ZUM BETREIBEN EINES GLEICHRICHTERS**
APPARATUS FOR OPERATING A RECTIFIER, PARTICULARLY A HALF-CONTROLLED RECTIFIER BRIDGE, AND METHOD FOR OPERATING A RECTIFIER
DISPOSITIF PERMETTANT DE FAIRE FONCTIONNER UN REDRESSEUR, EN PARTICULIER UN PONT REDRESSEUR SEMI-COMMANDÉ, ET PROCÉDÉ PERMETTANT DE FAIRE FONCTIONNER UN REDRESSEUR

(30) Priorität: 30.04.2014 DE 102014006365
(43) Veröffentlichungstag der Anmeldung: 08.03.2017
(73) Patentinhaber: SEW-EURODRIVE GmbH & Co. KG, 76646 Bruchsal (DE)
(72) Erfinder: HETTEL, Norbert, 76474 Au am Rhein (DE); KOLLAR, Hans-Jürgen, 76646 Bruchsal (DE)
(86) Internationale Anmeldenummer: PCT/EP2015/000769
(87) Internationale Veröffentlichungsnummer: WO 2015/165569

(56) Entgegenhaltungen:
- EP-A1- 0 286 510
- EP-A1- 0 286 510
- JP-A- H08 214 598
- JP-A- H08 214 598
- US-A- 5 995 395
- US-A- 6 038 155
- US-A- 6 038 155
- US-A1- 2011 044 080
- US-A1- 2011 044 080
- US-A1- 2020 083 818
- US-A1- 2022 263 421
- US-B1- 6 222 749

## Beschreibung

Die Erfindung betrifft eine Vorrichtung zum Betreiben eines Gleichrichters, insbesondere einer halbgesteuerten Gleichrichterbrücke, und ein Verfahren zum Betreiben eines Gleichrichters.

Es ist allgemein bekannt, dass eine mittels eines Brückengleichrichters und eines ausgangsseitig zugeschalteten Kondensators aus einer dreiphasigen Netzspannung eine Gleichspannung erzeugbar ist.

**Aus der** US 6 038 155 A **ist als nächstliegender Stand der Technik eine dreiphasige SCR Gleichrichterbrücke mit Sanftanlaufsteuerung bekannt.**

**Aus der** JP H08 214598 A **ist eine Spannungssteuerung mit exzellenter Antwort auf Frequenzvariation bekannt.**

**Aus der** EP 0 286 510 A1 **ist eine Schaltung zur Spannungsversorgung bekannt.**

**Aus der** US 2011/044080 A1 **ist ein Umrichter bekannt.**

**Aus der** US 5 995 395 A **ist eine Steuerung einer Brückenschaltung bei Nullspannung bekannt.**

**Aus der** US 6 222 749 B1 **ist ein Verfahren zur Strombegrenzung bei einem Kondensator eines Gleichrichters bekannt.**

Der Erfindung liegt daher die Aufgabe zugrunde, eine Begrenzung des Ladestroms zu erreichen.

Erfindungsgemäß wird die Aufgabe bei der Vorrichtung zum Betreiben eines Gleichrichters, insbesondere einer halbgesteuerten Gleichrichterbrücke, nach den in Anspruch 1 und bei dem Verfahren zum Betreiben eines Gleichrichters nach den in Anspruch 6 angegebenen Merkmalen gelöst.

Wichtige Merkmale der Erfindung bei der Gleichrichterbrücke, insbesondere eines Umrichters, sind, dass der Gleichrichter aus Netzphasen versorgt ist, insbesondere aus einem dreiphasigen Wechselspannungsnetz, und ausgangsseitig eine unipolare Spannung zur Verfügung stellt,
wobei der Gleichrichter steuerbare Schalter, insbesondere Halbleiterschalter, wie Thyristoren oder dergleichen, aufweist,
**wobei** aus einer jeweiligen Netzphase eine jeweilige Stromquelle gespeist ist, wobei der jeweils erzeugte Strom abhängig vom Zustand einer steuerbaren Schalteinheit, insbesondere abhängig vom Zustand eines Nullspannungsschalters NSS, als Ansteuersignal für den der jeweiligen Netzphase zugeordneten, steuerbaren Schalter verwendet wird.

Von Vorteil ist dabei, dass beim Stromnulldurchgang oder zumindest nahe beim Stromnulldurchgang die Schalter in den leitenden Zustand gesteuert werden, insbesondere also gezündet werden. Somit werden niedrige Verluste erreichbar. Außerdem ist ein Hochvoltschalter einsparbar und mechanische Schalter sind verzichtbar. Des Weiteren wird eine Fehlauslösung des Nullspannungsschalters verhinderbar.

Bei einer vorteilhaften Ausgestaltung ist die jeweilige Stromquelle aus einem jeweiligen über einen Einweggleichrichter aus der jeweiligen Netzphase versorgten Schalter S2 gebildet,
- dessen Steuereingang ebenfalls aus dem Ausgang, insbesondere aus der unipolaren Ausgangsspannung des Einweggleichrichters, des Einweggleichrichters gespeist ist solange ein Schalter S3 der steuerbaren Schalteinheit geöffnet ist und
- dessen Steuereingang auf ein im Vergleich zur jeweiligen Netzphase höheres Potential, insbesondere oberes Zwischenkreispotential, insbesondere also oberes Ausgangspotential des Gleichrichters, bringbar ist, wenn der Schalter S3 der steuerbaren Schalteinheit geschlossen ist, insbesondere so, dass den steuerbaren Schaltern des Gleichrichters kein Strom aus einer der Stromquellen zuführbar ist.

Von Vorteil ist dabei, dass ein die Stromquelle steuerbar ist und/oder die Weiterleitung des Stromes der Stromquelle verhinderbar ist, so dass die steuerbaren Schalter des Gleichrichters nicht angesteuert werden.

Bei einer vorteilhaften Ausgestaltung ist der Schalter S3 abhängig von Signalen einer übergeordneten Steuerung ansteuerbar,
insbesondere wobei der Schalter S3 abhängig von einem Nullspannungsschalter ansteuerbar ist, insbesondere wobei der Zustand des Nullspannungsschalters von der Zwischenkreisspannung, insbesondere vom oberen Ausgangspotential des Gleichrichters und einer jeweiligen Netzphasenspannung abhängt sowie von Signalen einer übergeordneten Steuerung. Von Vorteil ist dabei, dass die Stromquelle in einfacher Weise deaktivierbar und/oder abschaltbar ist.

Bei einer vorteilhaften Ausgestaltung ist am Gleichrichter ausgangsseitig eine Kapazität, insbesondere ein Zwischenkreiskondensator, angeordnet und/oder am Gleichrichter ausgangsseitig eine aus einem Bremswiderstand und einem steuerbaren Schalter, insbesondere Brems-Chopper, gebildete Reihenschaltung angeordnet. Von Vorteil ist dabei, dass überschüssige Energie, beispielsweise generatorisch erzeugte Energie, abführbar ist.

Bei einer vorteilhaften Ausgestaltung weist die steuerbare Schalteinheit von einem Ansteuermittel, insbesondere Nullspannungsschalter, ansteuerbare Schalter (S3) auf, wobei ein jeweiliger Schalter einer jeweiligen Netzphase zugeordnet ist,
insbesondere wobei das Ansteuermittel von einer übergeordneten Steuerung mittels eines Ansteuersignals NSS_OFF steuerbar ist und/oder die ansteuerbaren Schalter mittels eines Ansteuersignals GR_OFF einer übergeordneten Steuerung steuerbar ist. Von Vorteil ist dabei, dass eine einfache Freigabe des Nullspannungsschalters ausführbar ist, indem von der übergeordneten Steuerung keine Steuerspannung geliefert wird. Die Wegnahme der Freigabe hingegen muss dann durch Anlegen einer Steuerspannung ausgeführt werden. Somit ist also eine einfache Steuerbarkeit erreichbar.

Bei einer vorteilhaften Ausgestaltung sind die Stromquellen jeweils steuerbar, insbesondere mittels eines von einer übergeordneten Steuerung gelieferten Steuersignals GR_OFF. Von Vorteil ist dabei, dass wiederum eine einfache Steuerbarkeit gewährleistbar ist.

Bei einer vorteilhaften Ausgestaltung sind die steuerbaren Schalter, insbesondere Thyristoren, des Gleichrichters jeweils im oberen Zweig jeder Halbbrücke des Gleichrichters angeordnet. Von Vorteil ist dabei, dass der Gleichrichter steuerbar ist und somit der Zwischenkreis nur gemäß dem Energiebedarf aufladbar ist. Außerdem ist ein Begrenzen des Ladestroms des Zwischenkreiskondensators ermöglicht.

Bei einer vorteilhaften Ausgestaltung ist jeweils als Stromquelle ein MOSFET-Schalter in Drainschaltung verwendet
und/oder
als steuerbarer Schalter der Schalteinheit ist ein MOSFET-Schalter in Source-Schaltung verwendet. Von Vorteil ist dabei, dass ein Schalter in einfacher und steuerbarer Beschaltung verwendet ist.

Bei einer vorteilhaften Ausgestaltung ist ein Überspannungsschutz aus den Netzphasen gespeist,
insbesondere wobei der Überspannungsschutz eine Kapazität und Dioden aufweist, wobei über die jeweilige Diode Strom aus einer Netzphasen zur Kapazität zuleitbar ist,
insbesondere wobei der Kapazität ein Widerstand parallel zugeschaltet ist. Von Vorteil ist dabei, dass eine sehr schnelle Reaktion auf Spannungsänderungen ausführbar ist. Insbesondere bei schnellen Anstiegen der Spannung ist mittels des Überspannungsschutzes die überschüssige Energie an die Kapazität zuführbar und somit die Spannungsspitze abbaubar.

Wichtige Merkmale bei dem Verfahren zum Betreiben eines Gleichrichters, insbesondere der eine zumindest halbgesteuerte Gleichrichterbrücke aufweist, insbesondere eines Umrichters, sind, dass der Gleichrichter aus Netzphasen versorgt ist, insbesondere aus einem dreiphasigen Wechselspannungsnetz, und ausgangsseitig eine unipolare Spannung zur Verfügung stellt,
wobei der Gleichrichter steuerbare Schalter, insbesondere Halbleiterschalter, wie Thyristoren oder dergleichen, aufweist, wobei jeder Netzphase zumindest ein steuerbarer Schalter zugeordnet ist,
wobei der Gleichrichter ausgangsseitig, insbesondere also gleichspannungsseitig, eine Kapazität, insbesondere Zwischenkreiskondensator, speist,
**wobei** aus einer jeweiligen Netzphase eine jeweilige Stromquelle gespeist ist, wobei der von der jeweiligen Stromquelle jeweils erzeugte Strom abhängig vom Signal einer übergeordneten Steuerung als Steuerstrom für den der jeweiligen Netzphase zugeordneten, steuerbaren Schalter verwendet wird,
wobei bei Freigabe durch die übergeordnete Steuerung die Kapazität aus einer der Netzphasen mit einer von im Wesentlichen Null ausgehend anwachsenden Spannung, insbesondere Netzvierteilperiode, aufgeladen wird.

Von Vorteil ist dabei, dass beim Nulldurchgang das Aufladen des Zwischenkreiskondensators beginnt und der Ladestrom begrenzbar ist. Denn nur eine der Phasen liefert den Ladestrom und der spannungsanstieg folgt dem Netzphasenspannungsanstieg, also einem sinusförmigen Verlauf in einer Viertelperiode.

Bei einer vorteilhaften Ausgestaltung wird der von der Stromquelle erzeugte Strom dem steuerbaren Schalter des Gleichrichters zugeleitet, wenn die entsprechende Netzphasenspannung größer ist als die Ausgangsspannung, also Zwischenkreisspannung, des Gleichrichters und wenn sie kleiner ist als ein Spannungswert, welcher um einen vorgegebenen Spannungsdifferenzwert, insbesondere dessen Betrag zwischen 80 Volt und 100 Volt beträgt, größer ist als die Zwischenkreisspannung. Von Vorteil ist dabei, dass der Nullspannungsschalter nur in diesem Spannungsfenster betreibbar ist. Oberhalb wird die Stromquelle deaktiviert und unterhalb fließt kein Ladestrom, weil die Zwischenkreisspannung die Netzphasenspannung übertrifft.

Bei einer vorteilhaften Ausgestaltung wird die an der Kapazität anliegende Spannung, also Zwischenkreisspannung, erfasst und bei Überschreiten eines Schwellwerts, insbesondere der zwischen 200 Volt und 300 Volt beträgt, wird die Freigabe weggenommen, insbesondere von der übergeordneten Steuerung, und/oder bei Unterschreiten des Schwellwertes die Freigabe erteilt wird. Von Vorteil ist dabei, dass die Sicherheit erhöht ist.

Bei einer vorteilhaften Ausgestaltung wird die an der Kapazität anliegende Spannung, also Zwischenkreisspannung, erfasst und bei Erreichen des Spitzenwertes der Netzphasenspannung die Freigabe erteilt,
insbesondere wobei das Erreichen des Spitzenwertes festgestellt wird, wenn die Zwischenkreisspannung in einem vorgegebenen Wertebereich liegt und ein weiteres Ansteigen der Zwischenkreisspannung für ein vorgegebenes Zeitintervall nicht feststellbar ist. Von Vorteil ist dabei, dass die Sicherheit erhöht ist, weil der Nullspannungsschalter geöffnet wird und somit die steuerbaren Schalter des Gleichrichters im Normalbetrieb arbeiten, also netzphasenspannungsabhängig von den Stromquellen mit Steuerstrom beaufschlagt werden.

Bei einer vorteilhaften Ausgestaltung wird im Fehlerfall, insbesondere bei Durchlegieren eines Brems-Choppers, die Freigabe weggenommen. Von Vorteil ist dabei, dass die Sicherheit erhöht ist.

Bei einer vorteilhaften Ausgestaltung ist bei der Erfassung der Zwischenkreisspannung eine erste Verzögerungszeitkonstante vorgesehen und im Ansteuerpfad der Stromquelle, insbesondere also beim Weiterleiten des Freigabesignals an die Stromquelle, ist eine zweite Verzögerungszeitkonstante vorgesehen,
wobei die erste Zeitkonstante kleiner ist als die zweite Verzögerungszeitkonstante. Von Vorteil ist dabei, dass verhinderbar ist, dass die Ansteuerung der Stromquelle erfolgt, bevor der Nullspannungsschalter ein Ausschaltsignal liefert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Ausführungsbeispiel schematisch gezeigt, bei dem eine dreiphasige halbgesteuerte Netzgleichrichterbrücke aus einer Ansteuervorrichtung 4 steuerbar ist, die aus Netzphasen (L1, L2, L3) versorgt ist und abhängig vom Steuersignalen einer übergeordneten Steuerung betreibbar ist, wobei ein Überspannungsschutz 5 vorgesehen ist, der sehr schnell auf Spannungsänderungen reagieren.
In der Figur 2 ist ein weiteres erfindungsgemäßes Ausführungsbeispiel in konkreter Schaltungsausführung gezeigt.

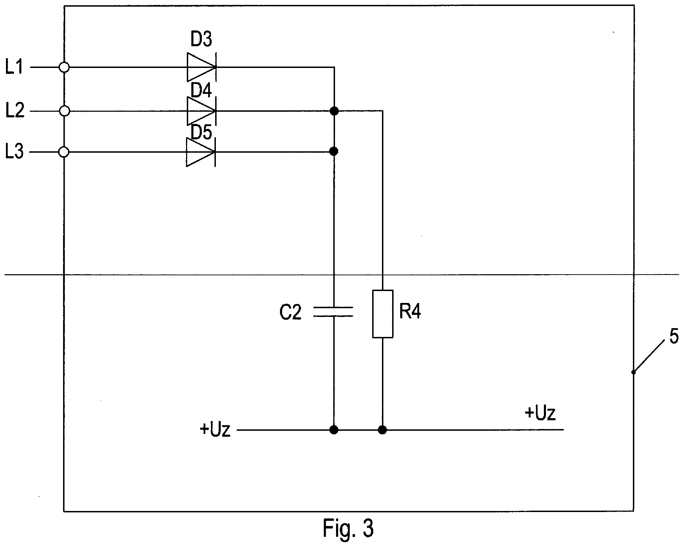

In der Figur 3 ist der Überspannungsschutz 5 beispielhaft gezeigt.

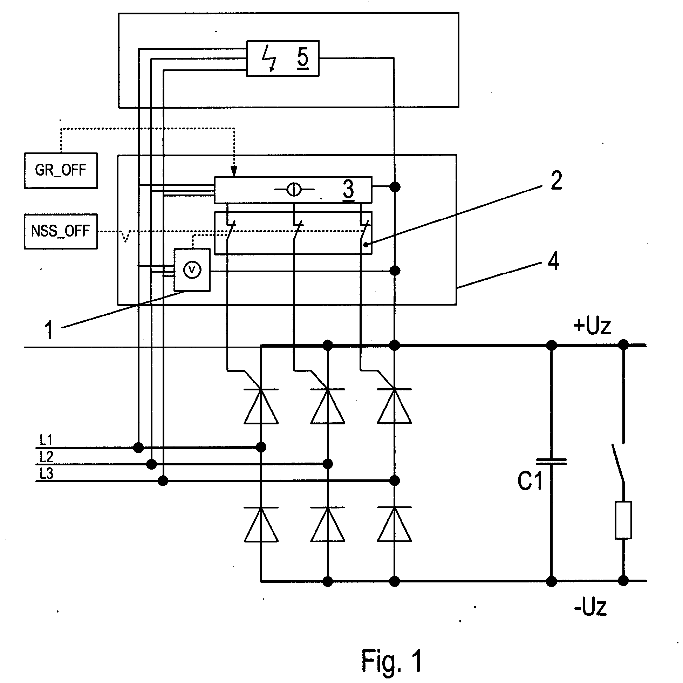

Wie in Figur 1 gezeigt, ist die halbgesteuerte Gleichrichterbrücke aus dem dreiphasigen Wechselspannungsnetz versorgt, welches die Phasenleitungen L1, L2 und L3 aufweist. In den oberen Zweigen der drei Halbbrücken sind hierbei steuerbare Leistungshalbleiterschalter, vorzugsweise Thyristoren, angeordnet und in den unteren Zweigen Dioden. Ausgangsseitig wird die gleichgerichtete Spannung dem Zwischenkreiskondensator C1 zugeführt, der zur Glättung der Spannung beiträgt. Diese Ausgangsspannung wird auch als Zwischenkreisspannung bezeichnet.

Aus dem Zwischenkreis, also aus der am Zwischenkreiskondensator C1 anliegenden Spannung, ist ein in den Figuren nicht dargestellter Wechselrichter versorgt, welcher einen Elektromotor speist und somit diesen drehzahlregelbar macht. Bei generatorischem Betrieb des Motors wird Energie vom Motor über den Wechselrichter in den Zwischenkreis geleitet, also ein Ansteigen der Zwischenkreisspannung verursacht.

Parallel zum Zwischenkreiskondensator C1 ist eine Reihenschaltung aus einem steuerbaren Schalter S1, also dem Brems-Chopper, und einem Bremswiderstand RB angeordnet, so dass zu hoher am Zwischenkreiskondensator C1 anliegenden Spannung Energie in Wärme verwandelbar ist mittels des Bremswiderstandes RB.

Der Überspannungsschutz 5 weist drei Dioden (D3, D4, D5) auf, welche jeweils zwischen einer jeweiligen Netzphasenleitung (L1, L2, L3) und einem Kondensator C2 angeordnet sind, wobei sie dann Strom von den Netzphasenleitungen (L1, L2, L3) dem Kondensator C2 zuleiten, wenn die an den Netzphasenleitungen (L1, L2, L3) höher sind als die am Kondensator C2 anliegende Spannung. Dem Kondensator C2 ist eine Entladewiderstand R4 parallel zugeschaltet, so dass der Kondensator mit einer entsprechenden Zeitkonstante entladen wird, wenn die am Kondensator C2 anliegende Spannung die an den Netzphasenleitungen (L1, L2, L3) anliegenden Spannungen übersteigt.

Auf diese Weise sind Überspannungsspitzen sehr schnell abbaubar, indem bei Auftreten der Überspannungsspitzen Energie an den Kondensator C2 abgeführt wird. Besonders vorteilhaft ist der Überspannungsschutz 5 bei schnell sich aufbauenden Spannungsänderungen, wie beispielsweise verursacht durch Blitzeinwirkung oder dergleichen.

Die Ansteuervorrichtung 4 ist aus den Netzphasenleitungen (L1, L2, L3) versorgt und erzeugt die Ansteuersignale für die steuerbaren Schalter der halbgesteuerten Netzgleichrichterbrücke. Die Ansteuervorrichtung 4 umfasst ein als Nullspannungsschalter fungierendes Ansteuermittel 1, die Stromquellen der Stromquellenvorrichtung 3 und die steuerbare Schalteinheit 2. Dabei ist jeder Netzphase eine der Stromquellen zugeordnet.

Zur Erzeugung der Ansteuersignale ist die Stromquellenvorrichtung 3 vorgesehen, deren Stromquellen mittels eines von einer übergeordneten Steuerung erzeugten Steuersignals GR_OFF für den Gleichrichter abschaltbar ist.

Wenn mittels des Steuersignals GR_OFF eine Freigabe der Stromquellenvorrichtung 3 bewirkt ist, wird der von den den jeweiligen Netzphasen (L1, L2, L3) zugeordneten Stromquellen jeweils erzeugte Strom durch eine steuerbare Schalteinheit 2 geleitet und als Ansteuersignal für den der jeweiligen entsprechenden Netzphase steuerbaren Schalter, insbesondere Halbleiterschalter, des Gleichrichters verwendet.

Die zur Durchleitung des Stromes der jeweiligen Stromquelle der Stromquellenvorrichtung 3 vorgesehene steuerbare Schalter der steuerbaren Schalteinheit 2 werden von dem Ansteuermittel 1 angesteuert, das mittels des von der übergeordneten Steuerung erzeugten Steuersignal NSS_OFF freigebbar oder sperrbar ist. Das als Nullspannungsschalter fungierende Ansteuermittel 1 ist mit den Netzphasen (L1, L2, L3) verbunden und weist ein Vergleichsmittel auf, welches die Zwischenkreisspannung mit der jeweiligen Phasenspannung vergleicht, insbesondere unter Berücksichtigung eines Schwellwertes.

Auf diese Weise ist gemäß Figur 1 bei Freigabe durch das Steuersignal NSS_OFF, beispielsweise beim Einschalten der den Gleichrichter umfassenden Anlage oder des den Gleichrichter umfassenden Elektrogeräts, wie Umrichter oder dergleichen, die Stromquelle mit dem zugeordneten Steuereingang des steuerbaren Schalters abtrennbar, wenn die Differenz aus der Zwischenkreisspannung und des Spannungswertes einer jeweiligen Netzphase einen positiven Schwellwert oder Null unterschreitet.

Wenn jedoch die Differenz aus der Zwischenkreisspannung und des Spannungswertes einer jeweiligen Netzphase einen positiven Schwellwert oder Null überschreitet, wird die Stromquelle mit dem Steuereingang des steuerbaren Schalters verbunden, wobei jedoch die Freigabe von der übergeordneten Steuerung vorliegen muss.

Außerdem wird von dem Ansteuerungsmittel 1 die Zwischenkreisspannung, also die am Zwischenkreiskondensator C1 anliegende Spannung verglichen mit einem Schwellwert, beispielsweise mit einem weiteren Schwellwert zwischen 200 Volt und 300 Volt. Wenn die Zwischenkreisspannung Uz diesen weiteren Schwellwert überschreitet, wird die Zuführung aus den Stromquellen ebenfalls unterbrochen.

Wenn also anfangs, also beim Einschalten des Elektrogeräts, keine Signalspannung NSS_OFF und auch GR_OFF anliegt, sind die Stromquellen freigegeben. Hierbei werden diese also aus den Netzphasen (L1, L2, L3) versorgt und liefern bei ansteigender Netzphasenspannung jeweils einen Steuerstrom an die Eingänge der steuerbaren Schalter der halbgesteuerten Netzgleichrichterbrücke. Somit zünden dann die steuerbaren Schalter, insbesondere Thyristoren, netzphasenspannungsabhängig. Nach dem Zünden wird der Zwischenkreiskondensator C1 von der entsprechenden Netzphasenspannung während deren Ansteigen von Null an aufgeladen. Somit ist ein zu hoher Ladestrom und/oder Ladestromanstieg begrenzt. Insbesondere ist es ermöglicht, dass die Aufladung aus nur einer der Netzphasen innerhalb einer Netzvierteilperiode im Wesentlichen ausführbar ist.

Erfindungsgemäß sind die den jeweiligen Netzphasen zugeordneten Stromquellen mittels der Niedervoltsteuersignale GR_OFF schaltbar und der Strom den Steuereingängen der steuerbaren Schalter über die ebenfalls vom Niedervoltsteuersignal NSS_OFF steuerbaren Schalter der Schalteinheit 2 zuführbar. Ein Mittelvoltschalter oder Hochvoltschalter ist somit nicht notwendig.

Wenn also die Freigabesignale NSS_OFF und GR_OFF von der übergeordneten Steuerung erteilt werden, werden die steuerbaren Schalter nach dem Nulldurchgang der jeweiligen Phasenspannung gezündet. Denn die jeweilige Stromquelle ist aus der jeweiligen Netzphase versorgt mittels beispielsweise Einweggleichrichtung, vorzugsweise durch eine einzige Diode. Im Fehlerfall oder bei Überlast ist das Freigabesignal GR_OFF entziehbar und somit kein Aufladen des Zwischenkreiskondensators C1 ausführbar. Das Aufladen des Zwischenkreiskondensators C1 ist innerhalb einer Netzviertelperiodendauer ausführbar.

Als Stromquelle ist jeweils ein MOSFET in Drainschaltung verwendbar.

Als Schalter der Schalteinheit 2 sind jeweils MOSFET in Sourceschaltung verwendbar.

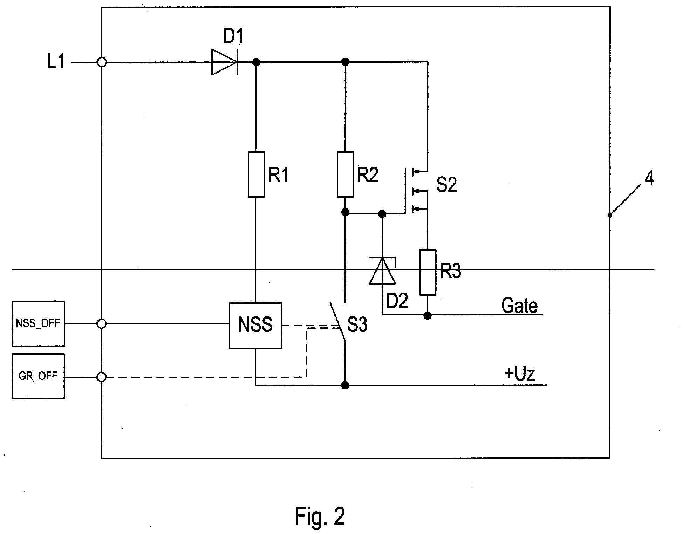

Bei dem weiteren erfindungsgemäßen Ausführungsbeispiel ist die Ansteuervorrichtung für jede Netzphase (L1, L2, L3) nach Figur 2 ausgeführt. Die restliche Beschaltung entspricht dem vorgenannten Ausführungsbeispiel.

Wie in Figur 2 gezeigt, wird aus der beispielhaften Netzphase L1 ein Einweggleichrichter, also die Diode D1 versorgt. Aus der Ausgangsspannung des Einweggleichrichters wird eine Reihenschaltung aus dem steuerbaren Schalter S2, insbesondere ein MOSFET-Schalter, und dem Widerstand R3 gespeist, wobei der vom Schalter S2 freigegebene Strom aus der Netzphase L1 über die Diode D1 und die genannte Reihenschaltung dem Steuereingang, insbesondere Gate, des der Netzphase L1 zugeordneten steuerbaren Schalters, insbesondere Thyristors, des Gleichrichters zugeführt wird, wenn der entsprechende Schalter S3 geöffnet ist.

Zur Erzeugung einer definierten Ansteuerspannung für den Schalter S2 ist eine Zenerdiode D2 vorgesehen. Dabei ist der genannten Reihenschaltung eine weitere Reihenschaltung aus der Zenerdiode D2 und einem Widerstand R2 parallelgeschaltet. Der Steuereingang des Schalters S2 ist mit dem Mittelabgriff dieser weiteren Reihenschaltung verbunden.

Somit ist mittels des Schalters S2 eine Stromquelle gebildet, die aus der Netzphase L1 versorgt ist.

Des Weiteren ist ein weiterer steuerbarer Schalter S3 vorgesehen, mittels dessen das obere Potential der Zwischenkreisspannung, also der Ausgangsspannung des gesteuerten Gleichrichters, mit dem Mittelabgriff verbindbar ist, also

Funktional entspricht der Schalter S3 einem Schalter der steuerbaren Schalteinheit 4 nach Figur 1, wobei bei jeweils geschlossenem Schalter S3 das Zünden der steuerbaren Schalter des Gleichrichters verhindert wird und bei geöffnetem Schalter S3 netzphasenspannungsabhängig über den Einweggleichrichter D1 der steuerbare Schalter leitend wird.

Der Schalter S3 wird abhängig vom Signal NS_OFF und GR_OFF der übergeordneten Steuerung angesteuert.

Der Einweggleichrichter ist nur als Diode D1 ausgeführt und weist keinen Glättungskondensator auf.

Wie in Figur 1 ist als Ansteuermittel 1 für den Schalter S3 der steuerbaren Schalteinheit der Nullspannungsschalter NSS verwendet. Dabei wird der der Netzphase L1 zugeordnete Schalter S3 vom Nullspannungsschalter NSS nur dann betätigt und somit die Zündung der steuerbaren Schalter, wie Thyristoren, des Gleichrichters nur dann freigegeben zur Zündung, wenn die an der Netzphase (L1) vorhandene Spannung größer ist als die Zwischenkreisspannung, also die an der Kapazität (C1) anliegende Spannung, aber kleiner ist als ein oberer Spannungswert, der um einen Spannungsdifferenzwert größer ist als die Zwischenkreisspannung.

Somit wird also der Schalter S3 offengehalten, wenn die Netzphasenspannung in diesem Spannungsfenster oberhalb der Zwischenkreisspannung sich befindet. Bei noch höheren Spannung wird der Schalter S3 vom Nullspannungsschalter NSS geschlossen.

Wenn die Netzphasenspannung kleiner ist als die Zwischenkreisspannung ist ein Stromfluss durch die Spannungsquelle hindurch, also beispielsweise auch ein Stromfluss durch den Schalter S2, schon selbsttätig verhindert.

Der Nullspannungsschalter NSS weist als auch ein Mittel zur Spannungserfassung auf, mit dem die Zwischenkreisspannung erfasst wird. Dabei ist eine Verzögerungszeitkonstante tau_1 realisiert.

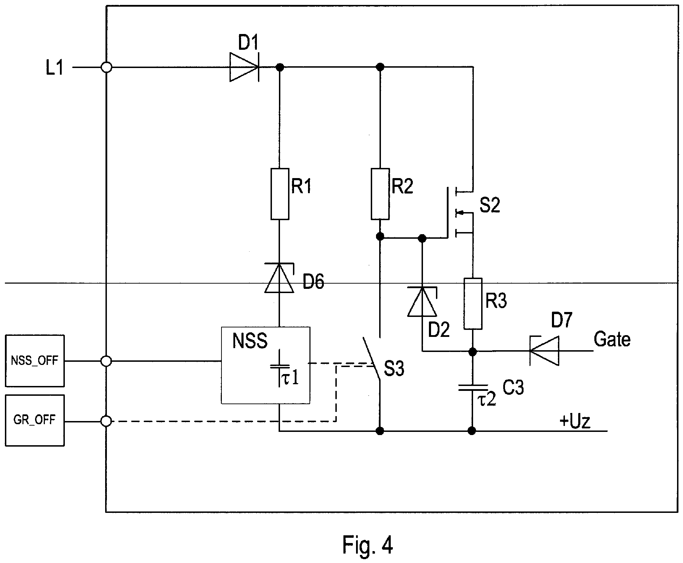

Ebenso wird vorzugsweise im Ansteuerpfad des Schalters S2 ein Zeitverzögerungsmittel vorgesehen, welches die Ansteuerung de Schalters S2 verzögert. Hierbei ist die Verzögerungszeitkonstante tau_2 vorgesehen, wobei diese größer ist als die Verzögerungszeitkonstante tau_1. Somit wird verhindert, dass das Gate des Schalters S2 angesteuert wird, bevor ein vom Nullspannungsschalter NSS erzeugtes Ausschaltsignal wirkt. Die zeitliche Verzögerung ist mittels RC-Glieder ausführbar, so dass eine jeweilige präzise definierte Verzögerungszeitkonstante erzeugt ist. In Figur 2 werden die Verzögerungszeitkonstanten durch nicht explizit dargestellte parasitäre Eigenschaften bewirkt. In Figur 4 ist im Unterschied zur Figur 2 zur Verdeutlichung eine konkrete Ausführung der Verzögerungszeitkonstante tau_2 mittels Bauteil C3, also Kapazität C3, dargestellt. Die Verzögerungszeitkonstante tau_1 ist nur symbolisch ausgeführt. Außerdem ist in Figur 4 eine Zenerdiode D6 zur Stabilisierung der Versorgungsspannung für den Nullspannungsschalter NSS eingezeichnet. Die Zenerdiode D7 im Ansteuerpfad sicher eine Mindestspannungsdifferenz im Ansteuerpfad des jeweiligen steuerbaren Schalters des Gleichrichters.

Das Ausführungsbeispiel nach Figur 2 und nach Figur 4 ist ansonsten in gleicher Weise ausgeführt.

Die übergeordnete Steuerung nimmt die Freigabe NSS_OFF des Nullspannungsschalters NSS zurück, wenn erkannt wird, dass die Zwischenkreisspannung den Spitzenwert der Netzspannung erreicht hat. Hierzu wird überwacht, ob die erfassten Zwischenkreisspannungswerte in einem Wertebereich liegen, der für einen Spitzenwert charakteristisch ist und zur Erhöhung der Zuverlässigkeit wird beobachtet, ob die Zwischenkreisspannung nicht mehr ansteigt. Wenn also für einen angemessenen Zeitabschnitt ein Ansteigen nicht mehr beobachtbar ist und der erreichte Wert in einem genannten Wertebereich liegt, wird davon ausgegangen, dass die Zwischenkreisspannung den Spitzenwert des Wechselspannungsnetzes erreicht hat. Somit wird dann von der übergeordneten Steuerung das Signal NS_OFF gegeben, also der Nullspannungsschalter NSS deaktiviert, insbesondere also auch das Öffnen oder Offenhalten des Schalters S3 bewirkt. Somit werden dann die steuerbaren Schalter des Gleichrichters, insbesondere Thyristoren, netzphasenspannungsabhängig gezündet, da die Stromquelle, insbesondere der Schalter S2, aus der Netzphasenspannung gespeist und angesteuert ist. In diesem Fall arbeitet der Gleichrichter dann in der bekannten Arbeitsweise eines Brückengleichrichters.

Wenn die Zwischenkreisspannung Uz kleiner ist als ein weiterer Schwellwert, beispielsweise ein Wert zwischen 200 Volt und 300 Volt, wird der die Freigabe für den Nullspannungsschalter NSS erteilt, also der Schalter S3 für den Nullspannungsschalter NSS freigegeben. Somit arbeitet der Nullspannungsschalter NSS in der oben beschriebenen Weise und bewirkt somit ein Öffnen des Schalters S3, wenn die Netzphasenspannung in dem durch die Spannungswertedifferenz definierten Fenster oberhalb der Zwischenkreisspannung sich befindet.

### Bezugszeichenliste

1 Ansteuerungsmittel Nullspannungsschalter
2 steuerbare Schaltereinheit
3 Stromquellenvorrichtung
4 Ansteuervorrichtung
5 Überspannungsschutz
NSS Nullspannungsschalter
C1 Zwischenkreiskondensator
C2 Kondensator
C2 Kondensator
D1 Diode
D2 Zenerdiode
D3 Diode
D4 Diode
D5 Diode
D6 Zenerdiode
D7 Zenerdiode
R1 Widerstand
R2 Widerstand
R3 Widerstand
R4 Widerstand
RB Bremswiderstand
S1 steuerbarer Schalter, insbesondere Brems-Chopper
S2 steuerbarer Schalter
L1 erste Netzphase
L2 zweite Netzphase
L3 dritte Netzphase
Tau_1 Verzögerungszeitkonstante
Tau_2 Verzögerungszeitkonstante
NSS_OFF Steuersignal für Nullspannungsschalter
GR_OFF Steuersignal für Gleichrichter
+Uz positives Zwischenkreispotential
-Uz negatives Zwischenkreispotential

## Patentansprüche

1. **System, aufweisend Gleichrichter und** Vorrichtung zum Betreiben des Gleichrichters, insbesondere einer halbgesteuerten Gleichrichterbrücke,
wobei der Gleichrichter **mit** Netzphasen **verbindbar** ist, insbesondere aus einem dreiphasigen Wechselspannungsnetz, und ausgangsseitig eine unipolare Spannung zur Verfügung stellt,
wobei der Gleichrichter erste steuerbare Schalter, insbesondere Halbleiterschalter, wie Thyristoren oder dergleichen, aufweist,
wobei das System Stromquellen und die dazu gehörigen Ansteuerpfade umfasst,
wobei die jeweilige Stromquelle von einer jeweiligen Netzphase speisbar ist,
wobei das System weiterhin steuerbare Schalteinheiten umfasst,
wobei die steuerbare Schalteinheiten jeweils einen dritten Schalter (S3) umfassen,
wobei das System weiterhin Einweggleichrichter umfasst,
wobei der Strom der jeweiligen Stromquelle abhängig vom Zustand der jeweiligen steuerbaren Schalteinheit, als Ansteuersignal für den der jeweiligen Netzphase zugeordneten, ersten steuerbaren Schalter verwendet wiro wobei die jeweilige steuerbare Schalteinheit weiterhin einen jeweiligen Nullspannungsschalter (NSS) aufweist,
wobei das System weiterhin eine Kapazität, insbesondere ein Zwischenkreiskondensator (C1), umfasst, wobei am Gleichrichter ausgangsseitig die Kapazität angeordnet
wobei das System weiterhin ein Mittel zur Erfassung der an der Kapazität anliegenden Spannung, also Zwischenkreisspannung, umfasst,
**wobei** das Mittel zur **Erfassung der Zwischenkreisspannung eine erste Verzögerungszeitkonstante** umfasst,
wobei die Stromquellen jeweils steuerbar ist, insbesondere mittels eines von einer übergeordneten Steuerung gelieferten Freigabesignals, der **Ansteuerpfad der Stromquelle, insbesondere also** zum **Weiterleiten des Freigabesignals an die Stromquelle, eine zweite Verzögerungszeitkonstante** umfasst,
**wobei die erste** Verzögerungszeitkonstante **kleiner ist als die zweite Verzögerungszeitkonstante,**
**wobei die jeweilige Stromquelle aus einem jeweiligen über** den jeweiligen **Einweggleichrichter** (D1) **aus der jeweiligen Netzphase versorgten** zweiten **Schalter (S2) gebildet ist,**
- dessen Steuereingang ebenfalls aus dem Ausgang, des Einweggleichrichters gespeist ist solange der dritte Schalter (S3) der steuerbaren Schalteinheit geöffnet ist und
- dessen Steuereingang auf ein im Vergleich zur jeweiligen Netzphase höheres Potential, insbesondere oberes Zwischenkreispotential, insbesondere also oberes Ausgangspotential des Gleichrichters, bringbar ist, wenn der dritte Schalter (S3) der steuerbaren Schalteinheit geschlossen ist, so, dass den steuerbaren Schaltern des Gleichrichters kein Strom aus einer der Stromquellen zuführbar ist,
wobei der jeweilige dritte Schalter (S3) weiterhin **abhängig von Signalen einer übergeordneten Steuerung ansteuerbar ist,**
wobei der jeweilige dritte Schalter (S3) weiterhin **abhängig von dem** jeweiligen **Nullspannungsschalter (NSS)** der jeweiligen Schalteinheit **ansteuerbar ist,**
**wobei der** jeweilige **Nullspannungsschalter (NSS) derart ausgeführt ist, dass der der** jeweiligen **Netzphase (L1) zugeordnete** dritte Schalter (S3) **vom** jeweiligen **Nullspannungsschalter (NSS) nur dann betätigt wird und somit die Zündung der steuerbaren Schalter des Gleichrichters nur dann freigegeben werden zur Zündung,** wenn die an der jeweiligen Netzphase (L1) vorhandene Spannung größer ist als die Zwischenkreisspannung, also die an der Kapazität (C1) anliegende Spannung, aber kleiner ist als ein oberer Spannungswert, der um einen Spannungsdifferenzwert größer ist als die Zwischenkreisspannung.

2. System nach Anspruch 1,
**dadurch gekennzeichnet, dass**
**der Zustand des** jeweiligen **Nullspannungsschalters (NSS) von der Zwischenkreisspannung, insbesondere vom oberen Ausgangspotential des Gleichrichters und einer jeweiligen Netzphasenspannung abhängt sowie von Signalen einer übergeordneten Steuerung.**

3. System nach mindestens einem der vorangegangenen Ansprüche,
**dadurch gekennzeichnet, dass**
die ersten steuerbaren Schalter, insbesondere Thyristoren, des Gleichrichters jeweils im oberen Zweig jeder Halbbrücke des Gleichrichters angeordnet sind.

4. System nach mindestens einem der vorangegangenen Ansprüche,
**dadurch gekennzeichnet, dass**
jeweils als Stromquelle ein MOSFET-Schalter in Drainschaltung verwendet ist und/oder dass jeweils als zweiter Schalter (S2) ein MOSFET-Schalter in Source-Schaltung verwendet ist.

5. System nach mindestens einem der vorangegangenen Ansprüche,
**dadurch gekennzeichnet, dass**
das System weiterhin einen Überspannungsschutz aufweist und dieser Überspannungsschutz (5) aus den Netzphasen speissbar ist, insbesondere wobei der Überspannungsschutz (5) eine Kapazität und Dioden (D2, D3, D4) aufweist, wobei über die jeweilige Diode (D2, D3, D4) Strom aus einer Netzphasen zur Kapazität zuleitbar ist,
insbesondere wobei der Kapazität ein Widerstand (R1) parallel zugeschaltet ist.

6. Verfahren zum Betreiben eines Gleichrichters, insbesondere der eine zumindest halbgesteuerte Gleichrichterbrücke aufweist,
wobei der Gleichrichter aus Netzphasen versorgt wird, insbesondere aus einem dreiphasigen Wechselspannungsnetz, und ausgangsseitig eine unipolare Spannung zur Verfügung stellt,
wobei der Gleichrichter erste steuerbare Schalter, insbesondere Halbleiterschalter, wie Thyristoren oder dergleichen, aufweist, wobei jeder Netzphase zumindest einer der ersten steuerbaren Schalter zugeordnet ist,
wobei der Gleichrichter ausgangsseitig, insbesondere also gleichspannungsseitig, eine Kapazität, insbesondere Zwischenkreiskondensator (C1), speist,
wobei aus einer jeweiligen Netzphase eine jeweilige Stromquelle gespeist ist, wobei der von der jeweiligen Stromquelle jeweils erzeugte Strom abhängig vom Signal einer übergeordneten Steuerung als Steuerstrom für den der jeweiligen Netzphase zugeordneten, ersten steuerbaren Schalter verwendet wird,
wobei bei Freigabe durch die übergeordnete Steuerung die Kapazität aus einer der Netzphasen mit einer von im Wesentlichen Null ausgehend anwachsenden Spannung, insbesondere Netzvierteilperiode, aufgeladen wird,
**wobei die an der Kapazität anliegende Spannung, also Zwischenkreisspannung, erfasst wird,**
**dadurch gekennzeichnet, dass**
**bei der Erfassung der Zwischenkreisspannung eine erste Verzögerungszeitkonstante vorgesehen ist und im Ansteuerpfad der Stromquelle, insbesondere also beim Weiterleiten des Freigabesignals an die Stromquelle, eine zweite Verzögerungszeitkonstante vorgesehen ist,**
**wobei die erste Zeitkonstante kleiner ist als die zweite Verzögerungszeitkonstante, wobei die jeweilige Stromquelle aus einem jeweiligen über einen Einweggleichrichter aus der jeweiligen Netzphase versorgten** zweiten **Schalter (S2) gebildet ist,**
wobei der jeweils erzeugte Strom abhängig vom Zustand einer jeweiligen steuerbaren Schalteinheit, als Ansteuersignal für den der jeweiligen Netzphase zugeordneten, steuerbaren Schalter (S1, S2) verwende wird,
wobei die steuerbare Schalteinheit weiterhin einen dritten Schalter (S3) aufweist,
**wobei der** dritte Schalter (S3) weiterhin **abhängig von Signalen einer übergeordneten Steuerung ansteuerbar ist,**
**wobei der der Netzphase (L1) zugeordnete** dritte Schalter (S3) **von einem Nullspannungsschalter (NSS) nur dann betätigt wird und somit die Zündung der** ersten **steuerbaren Schalter des Gleichrichters nur dann freigegeben werden zur Zündung,** wenn die an der Netzphase (L1) vorhandene Spannung größer ist als die Zwischenkreisspannung also die an der Kapazität (C1) anliegende Spannung, aber kleiner ist als ein oberer Spannungswert, der um einen Spannungsdifferenzwert größer ist als die Zwischenkreisspannung.

7. Verfahren nach Anspruch 6
**dadurch gekennzeichnet, dass**
der von der Stromquelle erzeugte Strom dem jeweils ersten steuerbaren Schalter des Gleichrichters zugeleitet wird, wenn die entsprechende Netzphasenspannung größer ist als die Ausgangsspannung, also Zwischenkreisspannung, des Gleichrichters und wenn sie kleiner ist als ein Spannungswert, welcher um einen vorgegebenen Spannungsdifferenzwert, insbesondere, dessen Betrag zwischen 80 Volt und 100 Volt beträgt, größer ist als die Zwischenkreisspannung.

8. Verfahren nach Anspruch 7 oder 6
**dadurch gekennzeichnet, dass**
die an der Kapazität anliegende Spannung, also Zwischenkreisspannung, erfasst wird und bei Überschreiten eines Schwellwerts, insbesondere der zwischen 200 Volt und 300 Volt beträgt, die Freigabe weggenommen wird, insbesondere von der übergeordneten Steuerung, und/oder bei Unterschreiten des Schwellwertes die Freigabe erteilt wird.

9. Verfahren nach Anspruch 6 bis 8
**dadurch gekennzeichnet, dass**
die an der Kapazität anliegende Spannung, also Zwischenkreisspannung, erfasst wird und bei Erreichen des Spitzenwertes der Netzphasenspannung die Freigabe erteilt wird, insbesondere wobei das Erreichen des Spitzenwertes festgestellt wird, wenn die Zwischenkreisspannung in einem vorgegebenen Wertebereich liegt und ein weiteres Ansteigen der Zwischenkreisspannung für ein vorgegebenes Zeitintervall nicht feststellbar ist.

10. Verfahren nach einem der Ansprüche 6 bis 9
**dadurch gekennzeichnet, dass**
im Fehlerfall, insbesondere bei Durchlegieren eines Brems-Choppers, die Freigabe weggenommen wird.

## Claims

1. System comprising a rectifier and a device for operating the rectifier, in particular a half-controlled rectifier bridge,
wherein the rectifier can be connected to network phases, in particular from a three-phase AC voltage network, and makes a unipolar voltage available at the output,
wherein the rectifier has first controllable switches, in particular semiconductor switches such as thyristors or the like,
wherein the system comprises current sources and the associated actuation paths,
wherein each current source can be fed by a respective network phase,
wherein the system further comprises controllable switching units,
wherein the controllable switching units each comprise a third switch (S3),
wherein the system further comprises half-wave rectifiers,
wherein the current of each current source is used as an actuation signal for the first controllable switch assigned to the relevant network phase depending on the status of the relevant controllable switching unit, wherein each controllable switching unit further has a respective zero-voltage switch (NSS),
wherein the system further comprises a capacitor, in particular a DC link capacitor (C1), wherein the capacitor is arranged at the output of the rectifier,
wherein the system further comprises a means for detecting the voltage applied to the capacitor, i.e. the DC link voltage,
wherein the means for detecting the DC link voltage comprises a first time constant of time delay,
wherein the current sources are each controllable, in particular by means of a release signal delivered by a superordinate controller, and the actuation path of the current source comprises a second time constant of time delay, i.e. in particular for relaying the release signal to the current source,
wherein the first time constant of time delay is less than the second time constant of time delay,
wherein each current source is formed from a respective second switch (S2) to which power is supplied from the relevant network phase via the relevant half-wave rectifier (D1),
- the control input of which second switch is likewise fed from the output of the half-wave rectifier as long as the third switch (S3) of the controllable switching unit is open, and
- the control input of which second switch can be brought to a higher potential, in particular an upper DC link potential, i.e. in particular an upper output potential of the rectifier, compared with the relevant network phase when the third switch (S3) of the controllable switching unit is closed, such that current cannot be supplied to the controllable switches of the rectifier from any of the current sources,
wherein furthermore each third switch (S3) can be actuated depending on signals of a superordinate controller,
wherein furthermore each third switch (S3) can be actuated depending on the relevant zero-voltage switch (NSS) of the relevant switching unit,
wherein each zero-voltage switch (NSS) is configured such that the third switch (S3) assigned to the relevant network phase (L1) is actuated by the relevant zero-voltage switch (NSS), and thus the triggering of the controllable switches of the rectifier is released for triggering, only when the voltage at the relevant network phase (L1) is greater than the DC link voltage, i.e. the voltage applied to the capacitor (C1), but less than an upper voltage value that is greater than the DC link voltage by a voltage difference value.

2. System according to claim 1,
**characterised in that**
the status of each zero-voltage switch (NSS) is dependent on the DC link voltage, in particular on the upper output potential of the rectifier and a relevant network phase voltage, as well as on signals of a superordinate controller.

3. System according to at least one of the preceding claims,
**characterised in that**
the first controllable switches, in particular thyristors, of the rectifier are each arranged in the upper branch of each half-bridge of the rectifier.

4. System according to at least one of the preceding claims,
**characterised in that**
a MOSFET switch is used as the current source in each drain circuit
and/or **in that**
a MOSFET switch is used as the second switch (S2) in each source circuit.

5. System according to at least one of the preceding claims,
**characterised in that**
the system further comprises an overvoltage protector, and this overvoltage protector (5) can be fed from the network phases,
the overvoltage protector (5) in particular having a capacitor and diodes (D2, D3, D4), it being possible to feed current from a network phase to the capacitor via the relevant diode (D2, D3, D4),
a resistor (R1) in particular being wired in parallel with the capacitor.

6. Method for operating a rectifier which in particular has an at least half-controlled rectifier bridge, power being supplied to the rectifier from network phases, in particular from a three-phase AC voltage network, and the rectifier making a unipolar voltage available at the output,
the rectifier having first controllable switches, in particular semiconductor switches such as thyristors or the like, each network phase being assigned at least one of the first controllable switches,
the rectifier feeding, at its output, i.e. in particular on the DC voltage side, a capacitor, in particular a DC link capacitor (C1),
a particular current source being fed from a particular network phase, the current generated by each current source being used as a control current for the first controllable switch assigned to the relevant network phase depending on the signal of a superordinate controller,
the capacitor, upon release by the superordinate controller, being charged from one of the network phases by a voltage, in particular a network quarter period, that increases from substantially zero,
the voltage applied to the capacitor, i.e. the DC link voltage, being detected,
**characterised in that**
a first time constant of time delay is provided during detection of the DC link voltage, and a second time constant of time delay is provided in the actuation path of the current source, i.e. in particular when relaying the release signal to the current source,
the first time constant of time delay being less than the second time constant of time delay, each current source being formed from a respective second switch (S2) supplied with power from the relevant network phase via a half-wave rectifier,
each generated current being used as an actuation signal for the controllable switch (S1, S2) assigned to the relevant network phase depending on the status of a relevant controllable switching unit,
the controllable switching unit furthermore having a third switch (S3),
the third switch (S3) furthermore being actuatable depending on signals of a superordinate controller,
the third switch (S3) assigned to the network phase (L1) being actuated by a zero-voltage switch (NSS), and thus the triggering of the first controllable switches of the rectifier being released for triggering, only when the voltage at the network phase (L1) is greater than the DC link voltage, i.e. the voltage applied to the capacitor (C1), but less than an upper voltage value that is greater than the DC link voltage by a voltage difference value.

7. Method according to claim 6,
**characterised in that**
the current generated by the current source is fed to the relevant first controllable switch of the rectifier when the corresponding network phase voltage is greater than the output voltage, i.e. the DC link voltage, of the rectifier and less than a voltage value that is greater than the DC link voltage by a predetermined voltage difference value, the magnitude of which is in particular between 80 V and 100 V.

8. Method according to claim 7 or claim 6,
**characterised in that**
the voltage applied to the capacitor, i.e. the DC link voltage, is detected, and the release is cancelled, in particular by the superordinate controller, when a threshold value, which is in particular between 200 V and 300 V, is exceeded, and/or the release is issued when the threshold value is not exceeded.

9. Method according to claims 6 to 8,
**characterised in that**
the voltage applied to the capacitor, i.e. the DC link voltage, is detected, and the release is issued when the peak value of the network phase voltage is reached, the reaching of the peak value being established in particular when the DC link voltage is in a predetermined value range and no further rise in the DC link voltage can be established for a predetermined time period.

10. Method according to any of claims 6 to 9,
**characterised in that**
the release is cancelled in the event of a fault, in particular a breakdown of a brake chopper.

## Revendications

1. Système comprenant un redresseur et un dispositif pour faire fonctionner le redresseur, en particulier un pont redresseur semi-commandé,
le redresseur pouvant être connecté aux phases de réseau, en particulier à partir d'un réseau de tension alternative triphasé, et devant fournir une tension unipolaire côté sortie,
le redresseur présentant des premiers commutateurs commandables, en particulier des commutateurs à semi-conducteurs, tels que des thyristors ou similaires,
le système comprenant des sources de courant et les trajets de commande correspondants,
la source de courant respective pouvant être alimentée par une phase de réseau respective,
le système comprenant en outre des unités de commutation commandables,
les unités de commutation commandables comprenant chacune un troisième commutateur (S3),
le système comprenant en outre des redresseurs mono-alternance,
le courant de la soure de courant respective étant utilisé en fonction de l'état de l'unité de commutation commandable respective comme signal de commande pour le premier commutateur commandable associé à la phase de réseau respective, l'unité de commutation commandable respective présentant en outre un commutateur de tension nulle (NSS) respectif,
le système comprenant en outre une capacité, en particulier un condensateur de circuit intermédiaire (C1), la capacité étant agencée au niveau du redresseur côté sortie,
le système comprenant en outre un moyen de détection de la tension appliquée à la capacité, c'est-à-dire la tension du circuit intermédiaire,
le moyen de détection de la tension de circuit intermédiaire comprenant une première constante de temps de retard,
les sources de courant étant chacune commandables, en particulier au moyen d'un signal de validation fourni par une commande de niveau supérieur, le trajet de commande de la source de courant, en particulier pour transmettre le signal de validation à la source de courant, comprenant une seconde constante de temps de retard,
la première constante de temps de retard étant inférieure à la seconde constante de temps de retard,
la source de courant respective étant formée d'un deuxième commutateur (S2) respectif alimenté par le redresseur mono-alternance respectif (D1) de la phase de réseau respective,
- dont l'entrée de commande est également alimentée par la sortie du redresseur mono-alternance tant que le troisième interrupteur (S3) de l'unité de commutation commandable est ouvert, et
- dont l'entrée de commande peut être amenée à un potentiel plus élevé par rapport à la phase de réseau respective, en particulier un potentiel de circuit intermédiaire supérieur, en particulierégalement un potentiel de sortie supérieur du redresseur, lorsque le troisième commutateur (S3) de l'unité de commutation commandable est fermé, de sorte qu'aucun courant ne peut être fourni aux commutateurs commandables du redresseur par l'une des sources de courant,
le troisième commutateur respectif (S3) pouvant toujours être commandé en fonction de signaux d'une commande de niveau supérieur,
le commutateur de tension nulle (NSS) respectif étant conçu de telle sorte que le troisième commutateur (S3) associé à la phase de réseau respective (L1) soit uniquement actionné par le commutateur de tension nulle (NNS) respectif, et donc l'allumage des commutateurs commandables du redresseur n'est alors libéré pour l'allumage que si la tension présente sur la phase fr réseau respective (L1) est supérieure à la tension du circuit intermédiaire, c'est-à-dire la tension appliquée à la capacité (C1), mais est inférieure à une valeur de tension supérieure qui est supérieure à la tension de circuit intermédiaire d'une valeur de différence de tension.

2. Système selon la revendication 1, **caractérisé en ce que** l'état du commutateur de tension nulle (NSS) respectif dépend de la tension de circuit intermédiaire, en particulier d'un potentiel de sortie supérieur du redresseur et d'une tension de phase de réseau respective, ainsi que de signaux d'une commande de niveau supérieur.

3. Système selon au moins l'une quelconque des revendications précédentes, **caractérisé en ce que** les premiers commutateurs commandables, en particulier les thyristors, du redresseur sont agencés respectivement dans la branche supérieure de chaque demi-pont du redresseur.

4. Système selon au moins l'une quelconque des revendications précédentes, **caractérisé en ce que**
un commutateur MOSFET est utilisé comme source de courant dans le circuit de drain et/ou **en ce que**
un commutateur MOSFET est utilisé comme deuxième commutateur (S2) dans le circuit de source.

5. Système selon au moins l'une quelconque des revendications précédentes, **caractérisé en ce que** le système présente en outre une protection contre les surtensions, et cette protection contre les surtensions (5) peut être alimentée à partir des phases de réseau,
en particulier, la protection contre les surtensions (5) présentant une capacité et des diodes (D2, D3, D4), le courant provenant d'une phase de réseau pouvant être acheminé vers la capacité via la diode respective (D2, D3, D4),
une résistance (R*1) étant en particulier connectée en parallèle à la capacité.

6. Procédé pour faire fonctionner un redresseur, en particulier qui présente un pont redresseur au moins semi-commandé,
le redresseur pouvant être alimenté à partir de phases de réseau, en particulier à partir d'un réseau de tension alternative triphasé, et devant fournir une tension unipolaire côté sortie,
le redresseur présentant des premiers commutateurs commandables, en particulier des commutateurs à semi-conducteurs, tels que des thyristors ou similaires, chaque phase de réseau étant associée à au moins l'un des premiers commutateurs commandables,
le redresseur alimentant une capacité côté sortie, en particulier côté courant continu, en particulier un condensateur de circuit intermédiaire (C1),
une source de courant respective est alimentée à partir d'une phase de réseau respective, le courant respectif produit par la source de courant respective étant utilisé comme courant de commande pour le premier commutateur commandable associé à la phase de réseau respective, en fonction du signal d'une commande de niveau supérieur,
lors de la validation par la commande de niveau supérieur, la capacité de l'une des phases de réseau étant chargée avec une tension augmentant à partir de sensiblement zéro, en particulier des quarts de période de réseau,
la tension appliquée à la capacité, c'est-à-dire la tension de circuit intermédiaire, étant détectée,
**caractérisé en ce que**
une première constante de temps de retard est prévue lors de la détection de la tension de circuit intermédiaire et une seconde constante de temps de retard est prévue dans le trajet de commande de la source de courant, en particulier lors de la transmission du signal de validation à la source de courant,
la première constante de temps étant inférieure à la seconde constante de temps de retard, la source de courant respective étant formée d'un deuxième commutateur (S2) respectif alimenté par un redresseur à mono-alternance à partir de la phase de réseau respective,
le courant généré respectif étant utilisé en fonction de l'état d'une unité de commutation commandable respective, comme signal de commande pour le commuteur commandable (S1, S2) associé à la phase de réseau respective,
l'unité de commutation commandable présentant en outre un troisième commutateur (S3),
le troisième commutateur (S3) pouvant toujours être commandé en fonction de signaux d'une commande de niveau supérieur,
le troisième commutateur (S3) associé à la phase de réseau (L1) étant actionné par un commutateur de tension nulle (NSS) et donc l'allumage des premiers commutateurs commandables du redresseur étant libéré pour l'allumage que si la tension présente sur la phase de réseau (L1) est supérieure à la tension de circuit intermédiaire, c'est-à-dire la tension appliquée à la capacité (C1), mais inférieure à une valeur de tension supérieure qui est supérieure à la tension de circuit intermédiaire d'une valeur de différence de tension.

7. Procédé selon la revendication 6, **caractérisé en ce que** le courant généré par la source de courant est envoyé au premier commutateur commandable respectif du redresseur si la tension de phase de réseau correspondante est supérieure à la tension de sortie, c'est-à-dire à la tension de circuit intermédiaire, du redresseur et si elle est inférieure à une valeur de tension qui est supérieure à la tension de circuit intermédiaire d'une valeur de différence de tension prédéterminée, en particulier dont la valeur est comprise entre 80 volts et 100 volts.

8. Procédé selon la revendication 7 ou 6, **caractérisé en ce que** la tension appliquée à la capacité, c'est-à-dire la tension de circuit intermédiaire, est détectée et en cas de dépassement d'une valeur de seuil, en particulier qui est comprise entre 200 volts et 300 volts, la libération est retirée, en particulier par la commande de niveau supérieur, et/ou en cas de dépassement de la valeur de seuil, la libération est accordée.

9. Procédé selon les revendications 6 à 8, **caractérisé en ce que** la tension appliquée à la capacité, c'est-à-dire la tension de circuit intermédiaire, est détectée et la libération est accordée lorsque la valeur de crête de la tension de phase de réseau est atteinte, en particulier lorsque l'atteinte de la valeur de crête est constatée lorsque la tension de circuit intermédiaire se situe dans une plage de valeurs prédéterminée et qu'une nouvelle augmentation de la tension de circuit intermédiaire ne peut pas être constatée pendant un intervalle de temps prédéterminé.

10. Procédé selon l'une quelconque des revendications 6 à 9, **caractérisé en ce que** la libération est retirée en cas de défaut, en particulier lors de la pénétration d'un hacheur de freinage.
